# EUROPEAN PATENT APPLICATION

(11) **EP 2 201 865 A1**
(43) Date of publication of application: **30.06.2010**
(21) Application number: 09177524.7
(22) Date of filing: 30.11.2009
(51) Int. Cl.: A47C 27/10, A61G 7/057, G01G 5/04

(54) **System, apparatus and method for controlling internal pressure of inflatable pad**

(30) Priority: 01.12.2008 US 325948
(71) Applicant: Wang, Suzanne, 6F, No. 5, Lane 345, Yangguang St., Neihu Taipei City 114 (TW)
(72) Inventor: Liu, Tsung Hsien, Taipei City 111 (TW); Lin, Yu-Hang, Taipei City 111 (TW); Lin, Ho Yu, Taipei County 251 (TW)
(74) Representative: Hofmann, Matthias

(57) **Abstract**

A system (100), apparatus (300) and method for controlling an internal pressure of an inflatable pad (200) are disclosed. The apparatus (300) includes a control valve (310), a sensor (325), a driving device (330) and a controller (320). The control valve (310) is switched between statuses to selectively perform inflation and deflation of the inflatable pad (200). The sensor (325) measures the internal pressure of the inflatable pad (200). The driving device (330) is coupled to the control valve (310) to blow air into the inflatable pad (200). The controller (320) is coupled to the control valve (310) for controlling the internal pressure at a predetermined pressure. Responsive to the present of a user, the controller (320) deflates the inflatable pad (200) within a deflation period and records the internal pressure during the deflation period. A characteristic curve is obtained representing the variation of the internal pressure corresponding to the user and an appropriate pressure is determined based on the characteristic curve.

## Description

### Field of the Invention

This invention generally relates to a pressure controlling system, apparatus and method for an inflatable pad and more specifically to a system, apparatus and method for determining an appropriate pressure of the inflatable pad.

### Background of the Invention

Compared to the conventional bed, the inflatable pad may provide better support to the user and equally distribute the pressure through the whole mattress preventing specific portion from compressed, thus the inflatable pad has been broadly adopted for therapeutic use or healthy care. However, it is necessary to set specific internal pressure for every patient due to his special condition. The nurse needs to reconfigure the inflatable pad for each patient, which leads to inefficiency and even affects the quality of medical treatment.

Many solutions are provided to solve the above problems. Huntleigh suggest to externally adding a thin bladder under the mattress. When a patient lies on the mattress, the body weight of the patient will compress the thin bladder and then the internal pressure of the mattress is adjusted according to the measured pressure of the thin bladder. For example, when the pressure in the thin bladder is decreased, the mattress is deflated to lower the internal pressure and vice versa. However, it may not accurately provide an appropriate internal pressure for each user, and an additional bladder means more expensive manufacturing cost.

Gaymer disclosed in US Patent 6,643,694 issued on September 13, 2005 a customized mattress having a bladder inside. A conductive device is disposed on the bladder and when the bladder is deflated or inflated beyond limit, the conductive device is activated and a signal is transmitted to the controller to perform corresponding inflation or deflation. Although the internal pressure may be maintain within a predetermined range by means of Gaymer's proposal, it still fails to accurately provide an appropriate internal pressure for each user, and an additional bladder and complicated conductive device also cause expensive cost.

Hill-ROM disclosed in US Publication 2007/0272450 published on November 29, 2007 an external bladder under mattress for measuring the body weight of the user. Before the use of the mattress, the pressure of the external bladder is increased to a basic pressure. When the patient lies on the mattress, the pump will continue to pressurize the bladder for a fix period. Users with different body weights will lead to different final pressure, by which the body weight will be calculated. Thereafter, the internal pressure of the mattress is configured based on the calculated body weight of the user. Although Hill-ROM's proposal may respectively calculate the internal pressure for each user, however, the calculated result is highly depending on the performance of the pump. Even for the same user, the calculation result will be different if the performance of the pump is changed due to such as manufacturing tolerance or aging problem. Further, once the manufacturer decides to use a new pump model, the entire process need to be performed again entirely. As the above descriptions, Hill-ROM does not provide an accurate result while the additional bladder also increases the manufacturing cost.

Therefore, it will be advantageous to provide a mattress without any additional bladder and an accurate control of the internal pressure of the mattress according to the characteristics of each user. Not only the manufacturing cost can be significantly lowered but the performance of medical treatment can also be improved.

### Summary of the Invention

One aspect of the present invention is to provide a system, apparatus and method for controlling an internal pressure of an inflatable pad without additional use of an external bladder or a customized mattress.

Another aspect of the present invention is to provide a system, apparatus and method for precisely controlling an internal pressure of an inflatable pad.

Yet another aspect of the present invention is to provide a system, apparatus and method for determining an appropriate pressure corresponding to users with different characteristics.

Further aspect of the present invention is to provide a easy installation, user friendly and cost efficient system, apparatus and method for controlling internal pressure of an inflatable pad.

A pressure controlling system is disclosed according to one aspect of the present invention. The system includes an inflatable pad and a control apparatus. The inflatable pad has a mattress for supporting a user. The apparatus includes a control valve, a sensor, a driving device and a controller. The control valve is switched between statuses to selectively perform inflation and deflation of the mattress. The sensor measures the internal pressure of the mattress. The driving device is coupled to the control valve to blow air into the mattress. The controller is coupled to the control valve for controlling the internal pressure at a predetermined pressure. Responsive to the present of a user, the controller deflates the mattress within a deflation period and records the internal pressure during the deflation period. A characteristic curve is obtained representing the variation of the internal pressure corresponding to the user and an appropriate pressure is determined based on the characteristic curve.

On the other aspect of the present invention, the mattress further includes at least one first cell and at least one second cell. The control valve further includes at least one first opening, at least one second opening, at least one first outlet opening, at least one second outlet opening and an inlet opening. The control apparatus further includes a hose having a first transport tube connecting the first opening and the first cell and a second transport tube connecting the second opening and the second cell. The inlet opening is coupled to the driving device and the control valve selectively allows the performance of inflation through the first opening and second opening and the performance of deflation through the first outlet opening and the second outlet opening.

Yet another aspect of the present invention, the sensor further includes at least one first sensing unit and at least one second sensing unit for respectively measuring an internal pressure of the first cell and an internal pressure of the second cell.

A method for controlling an internal pressure of a mattress of an inflatable pad according to another aspect of the present invention is disclosed. The method includes the steps of: controlling the internal pressure of the mattress to a predetermined pressure; upon the present of a user, deflating the mattress within a deflation period; recording a variation of the internal pressure during the deflation period; obtaining a characteristic curve corresponding the user; comparing the obtained characteristic curve to a database containing a plurality of characteristic curves corresponding to persons with a plurality of mass distributions; and determining an appropriate pressure corresponding to the user based on the comparison.

Other objects and advantages of the present invention will become apparent from the following descriptions, taken in connection with the accompanying drawings, wherein, by way of illustration and example, several embodiments of the present invention are disclosed.

### Brief Description of the Drawings

The drawings constitute a part of this specification and include exemplary embodiments of the invention, which may be embodied in various forms. It is to be understood that in some instances, various aspects of the invention may be shown exaggerated or enlarged to facilitate an understanding of the invention.

FIG. 1 is a schematic view illustrating an internal pressure controlling system according to one embodiment of the present invention;

FIG. 2 is a schematic view illustrating the infrastructure of the system;

FIG. 3 is a flowchart illustrating an internal pressure controlling method according to another embodiment of the present invention;

FIG. 4 is a schematic view illustrating an internal pressure controlling system according to yet another embodiment of the present invention;

FIG. 5 is a schematic view illustrating the control apparatus shown in FIG. 4;

FIG. 6A is a schematic view illustrating characteristic curves based on constant duration according to one embodiment of the present invention;

FIG. 6B is a schematic view illustrating characteristic curves based on target pressure according to another embodiment of the present invention; and

FIG. 7 is an exemplary characteristic curves corresponding to users with different mass distributions.

### Detailed Description of the Invention

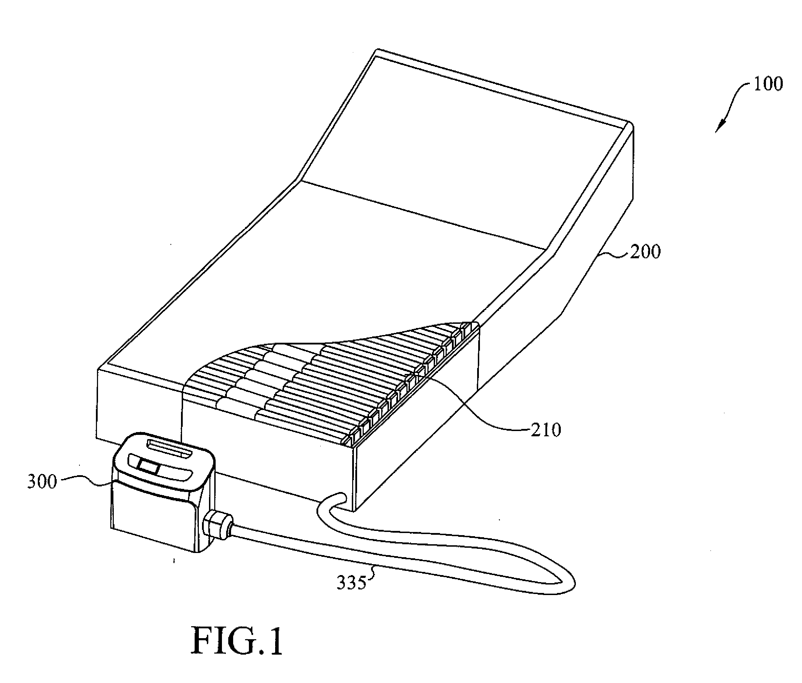

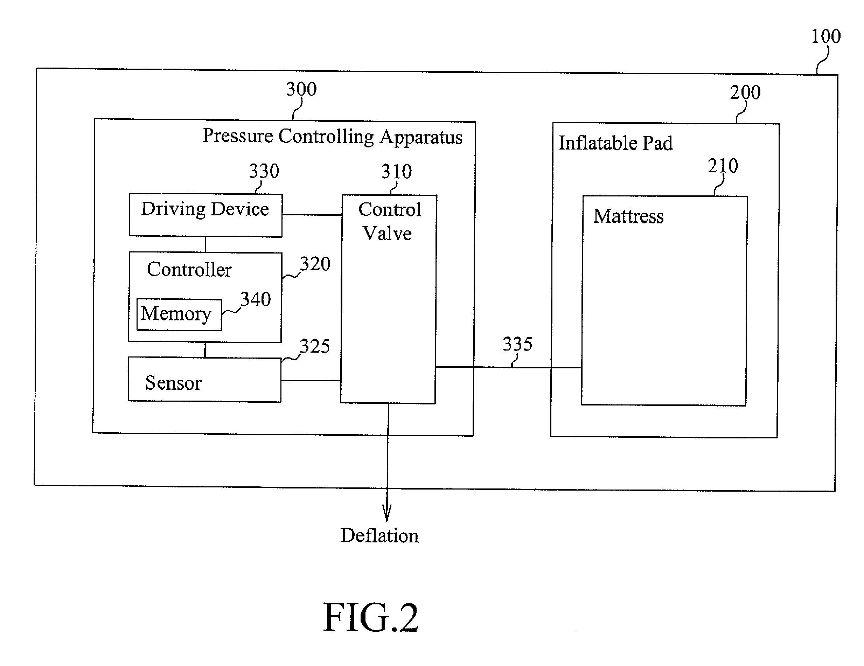

FIG. 1 is a schematic view illustrating an internal pressure controlling system 100 according to one embodiment of the present invention. The system 100 includes an inflatable pad 200 and a control apparatus 300. The inflatable pad 200 includes a mattress 210 for supporting users. Please note that any conventional pads may be used as the inflatable pad 200 in particular embodiments of the present invention without any additional bladders or any customizations to the mattress. FIG. 2 is a schematic view illustrating the infrastructure of the system 100, including a control valve 310, a controller 320, a sensor 325, a driving device 330 a hose 335 and a memory 340. The controller 320 controls the control valve 310 to switch between statuses to selectively perform inflation and deflation of the mattress 210, correspondingly increasing or decreasing the internal pressure of the mattress 210. The driving device 310, such as a pump, is coupled to the control valve 310. The hose 335 connects the control valve 310 and the mattress 210 allowing the driving device 310 to blow air into the mattress 210. The sensor 325 is coupled to the control valve 310 to measure the internal pressure of the mattress 210.

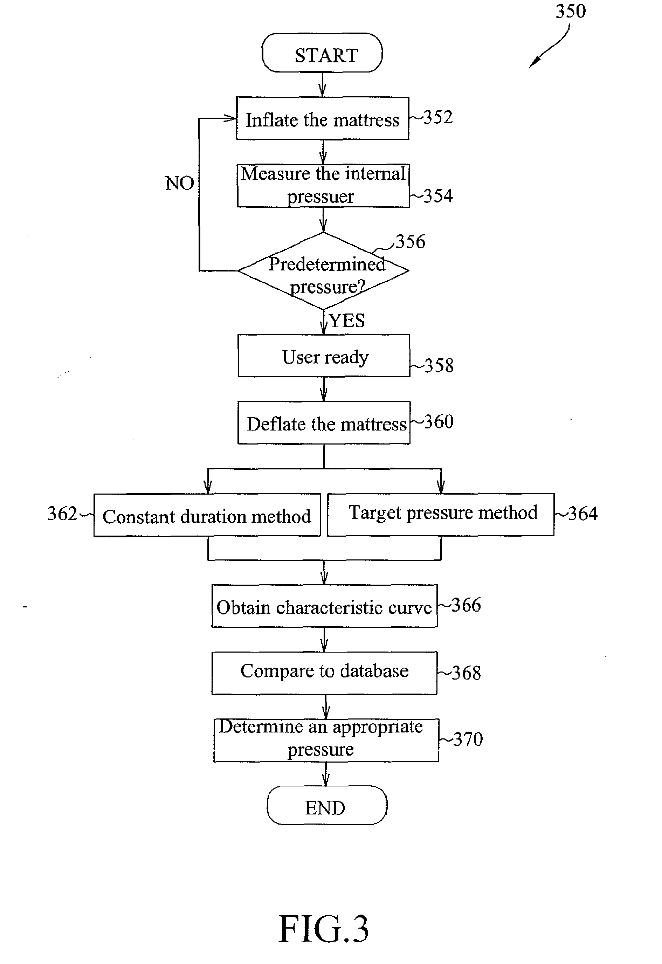

Further details of the pressure controlling processes are described hereinafter for those who skilled in the art to clearly understand the embodiments of the present invention. FIG. 3 is a flowchart illustrating an internal pressure controlling method 350 according to another embodiment of the present invention. The method begins with the controller 320 controlling the driving device 330 to inflate the mattress 210 through the control valve 310 and hose 335 (step 352). The sensor 325 measures the internal pressure of the mattress 210 (step 354) until the internal pressure substantially equals to a predetermined pressure (step 356). If the sensor 325 measures the internal pressure lower than the predetermined pressure, the process backs to step 352 and continues the inflation of the mattress 210. The predetermined pressure is determined in the way in accordance with the database stored in the memory 340 without any special limitations and it will be discussed later. Please noted that the purpose of step 352 to step 356 is to make sure that the pressure controlling process begins at the internal pressure of mattress 210 equaling to the predetermined pressure, while there are many modifications or arrangements to achieve the object. For example, if the internal pressure of the mattress 210 is higher than the predetermined pressure due to any operational causes at the beginning of the process, a deflation may be performed. Alternatively, the controller 320 may, after the predetermined pressure is reached, continue to observe the internal pressure of the mattress 210 for a period and begins the process when the internal pressure is stable within such period. In other words, the exemplary embodiments of the present invention shall be regarded as a description purpose rather than limitations. After the predetermined pressure is measured as described above, the user may lie or sit down on the mattress 210 to begin the process (358).

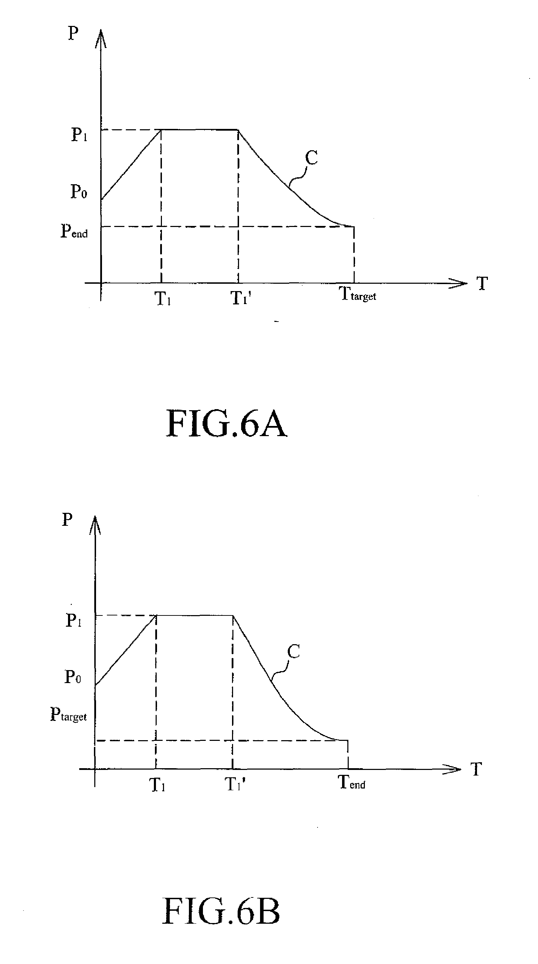

When the user is ready, the controller 320 controls the control valve 310 to deflate the mattress 210 within a deflation period and records a variation of the internal pressure during said deflation period. For an exemplary purpose, two methods, namely constant duration method and target pressure method, may be embodied during the deflation period depending on the design choices or practical preferences, which are not limited. For constant duration method (step 362), the controller 320 will use a constant duration of deflation period for every users, and records the internal pressure of mattress 210 at the end of the deflation period.. Thereafter, a characteristic curve corresponding to said user is obtained (step 366). Please refer to FIG. 6A illustrating characteristic curves based on constant duration according to one embodiment of the present invention. The system 100 inflates the mattress 210 from internal pressure P0 and measures the internal pressure being predetermined pressure P1 at time T1. The system 100 keeps the internal pressure at the predetermined pressure P1 for a period until time T1'. When the user is ready, the mattress 210 is deflated for a constant duration until time Ttarget and the controller 320 keeps records the internal pressure during this deflation period. At the time Ttarget, the controller 320 will record the final internal pressure Pend and generates the data sets representing the characteristic curve C corresponding to the user.

Alternatively in the target pressure method (step 364), the controller 320 will set a target value of the internal pressure instead of constant duration. The deflation period will end at the time the measured internal pressure equals to the target pressure. At that time, the duration of deflation period will be recorded and the characteristic curve corresponding to the user is obtained (step 366). Please refer to FIG. 6B illustrating characteristic curves based on target pressure according to one embodiment of the present invention. The system 100 inflates the mattress 210 from internal pressure P0 and measures the internal pressure being predetermined pressure P1 at time T1. The system 100 keeps the internal pressure at the predetermined pressure P1 for a period until time T1'. When the user is ready, the mattress 210 is deflated for a period and the controller 320 keeps records the internal pressure during this deflation period. The deflation period ends when the measured internal pressure equals to a target pressure Ptarget, the controller 320 will record the end time of deflation period Tend and generates the data sets representing the characteristic curve C corresponding to the user. Please also note that the "recorded time" referred in this specification may be either the duration of a period, the beginning time, the end time or any specific time as the case may be regardless the in the type of relative time or absolute time.

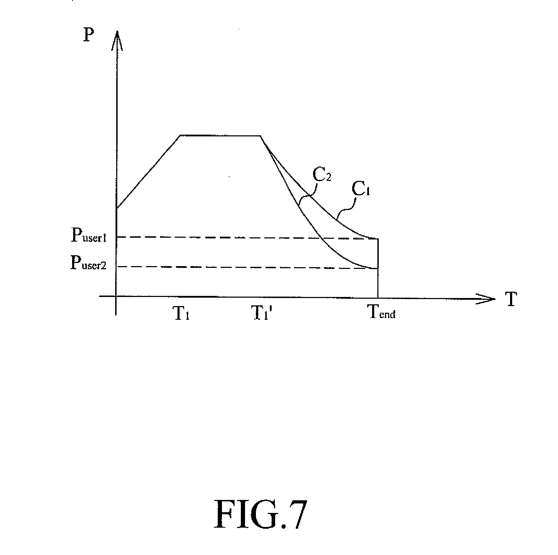

Generally speaking, users with identical body weight may still have different body shapes, which will lead to different appropriate pressure of the mattress 210. For example, a user may have pear shape of his body and the weight distribution is concentrated at two ends of the inflatable pad 200. Even with the same body weight, however, another user may have an apple shape of his body and the weight distribution is then concentrated in the central portion of the inflatable pad 200. Moreover, height of a user also affects the weight distribution. Determining the internal pressure merely based on the body weight of the user may not provide an appropriate result, which actually fits the user with specific characteristics. Even though some conventional method tends to solve this problem by detecting user's characteristics with more complicated equipments, it leads to expensive cost and complicated operation process. According to particular embodiments of the present invention, users with different body shapes are distinguishable and a better effect compared to the conventional solutions may be provided. Further, simple design also reduces the entire cost according to the embodiments of the present invention. Please refer to FIG. 7 illustrating two users having identical body weight with different body shapes. Even though they have identical body weight in this case, the embodiments of the present invention may notice difference mass distributions via the characteristic curves C1 and C2 shown in FIG. 7. Therefore, the memory 340 of control apparatus 300 may store many characteristic curves corresponding to users with different body shapes. In this embodiment, such data is stored in the memory 340 embedded within the controller 320. In other embodiment, however, the memory 340 may be a standalone device depending on the design choice. When a characteristic curve corresponding to the present user is obtained, the controller 320 compares such characteristic curve to the database stored within the memory 340 and then determines an appropriate pressure for such user (step 370). Basically, the appropriate pressure may be accurately determined by the characteristic curve comparison. Nevertheless, the internal pressure Pend or end time of deflation period Tend may also be used to further refine the determination. Please note that the above descriptions shall be deemed exemplary embodiments rather than limitations to the present invention. For example, the above-described parameters may be selectively used in different embodiments depending on the practical requirements case by case, or the characteristic curve may be calculated by interpolation, extrapolation, progression, etc. based on the recorded pressure during the deflation period.

Although the embodiment of the present invention uses a driving device such as a pump to perform inflation of mattress 210, however, the appropriate pressure is determined by the characteristic curve obtained during the deflation process and is independent of the actual power of the pump. Even if the pumps are significantly different from each other due to manufacture tolerance or aging problems whatsoever, it only affects the time prior to the internal pressure reaching the predetermined pressure while the measurement and generation of characteristic curve will not be affected. Basically, the deflation process is mainly depending on the diameter of the outlet opening of the control valve 310. Those who skilled in the art may understand that the manufacture tolerance and aging problem occurred (if any) in the outlet opening of the control valve 310 are significantly minor as compared to those in the pump, and therefore the measurement result may be accurately obtained. As to the case that the manufacturer desires to use a new pump model with different diameter of opening, the database may be applied merely after some minor revisions, which is considerably easy, inexpensive and accurate. In a preferred embodiment of the present invention, the inner diameter of the outlet opening of the control valve 310 is between about 0.1 mm to about 30 mm. It should be noted that a bottleneck other than the outlet opening thorough the air flowing path may be controlled to achieve the substantially similar deflation process. For example, in an alternative embodiment, the diameter of outlet opening of the control valve 310 may be 40 mm while the inner diameter of the hose 335 may be controlled within the preferred range to obtain a substantially similar result. Those who skilled in the art shall understand the location of the bottleneck may be decided according to manufacturing selection in view of engineering and/or business considerations.

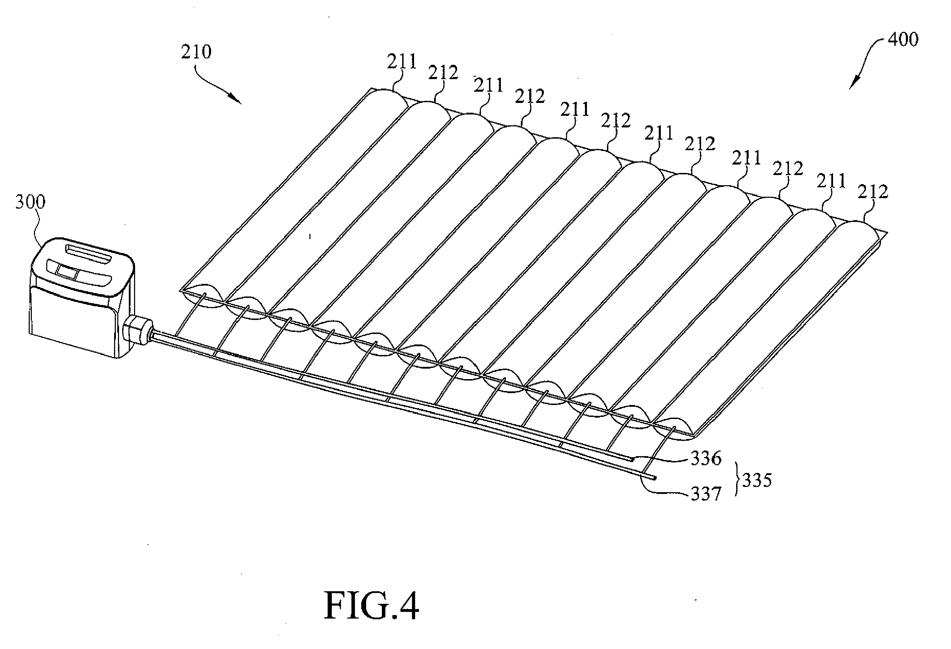

FIG. 4 is a schematic view illustrating an internal pressure controlling system 400 according to yet another embodiment of the present invention, wherein the like reference numbers denote the like elements. Please understand that some elements in FIG. 4 are omitted for clarification and conciseness, such as the outer covering of the hose 335 is omitted or only mattress 210 of the inflatable pad 200 is depicted, while it will not affect the enablement of the present invention. In this embodiment, the mattress 210 includes a plurality of first cells 211 and a plurality of second cells 212. The first cells are interconnected by the first transport tube 336 of the hose 335 through which the inflation/deflation process are performed. Similarly, the second cells are interconnected by the second transport tube 337 of the hose 335 through which the inflation/deflation process are performed. By means of alternate inflation/deflation of the first cells and second cells, the pressure exerted on the user may be relieved.

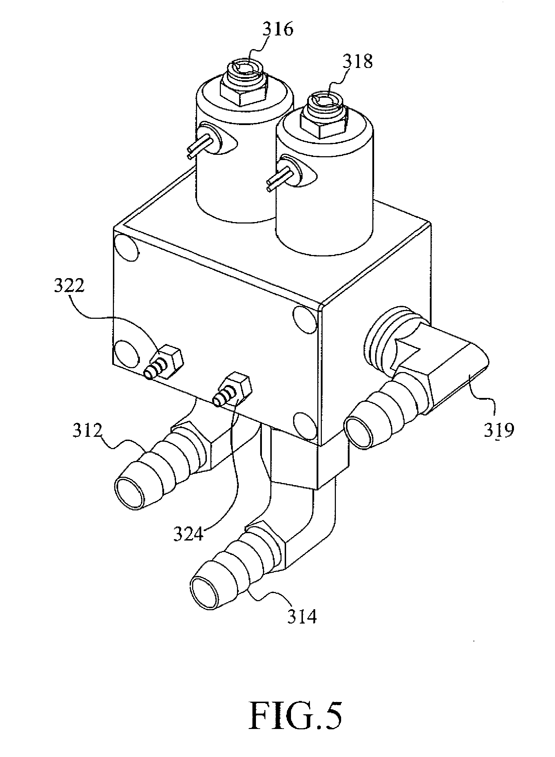

FIG. 5 is a schematic view illustrating the control valve 310 of the control apparatus 300 shown in FIG. 4. The control valve 310 includes a first opening 312, a second opening 314, a first outlet opening 316, a second outlet opening 318 and an inlet opening 319. The driving device 330 is coupled to the inlet opening 319 to blow air into the mattress 210. The first transport tube 336 connects the first opening 312 and the first cell 211 and the second transport tube 337 connects the second opening 314 and the second cell 212. The control valve 310 may selectively allow the performance of inflation through the first opening 312 and second opening 314, and may selectively allow the performance of deflation through the first outlet opening 316 and the second outlet opening 318. It should be noted that the control valve 310 is embodied as an electronic valve in this embodiment, and however in alternative embodiments, a mechanical valve, magnetic valve, optical valve and the likes may also be used without any detrimental to the embodiment of the present invention. Those who skilled in the art may implement other valves based on the disclosure herein without additional works or researches.

The sensor 325 further includes a first sensing unit 322 and a second sensing unit 324 respectively disposed on the first opening 312 and second opening 314 of the control valve 310 for respectively measuring the internal pressure of the first cell 211 and the second cell 212. Therefore, the embodiments of the present invention may determine appropriate pressure respectively for each cell. Each cell may be designated for its preferred pressure based on the characteristics of the user, which may lead to better result and more comfortable experience. In other words, the sensor 325 may include the sensing units each corresponding to one cell to determine the pressure therein in this embodiment. In another embodiment, the number of the sensing units needs not to be identical to that of the cells. For example, the sensor 325 may have only one sensing unit 322 connected to both the first cell 211 and the second cell 212. The sensing unit 322 may alternately measure the pressure of the first cell 211 and the second cell 212.

As mentioned above, it is disclosed a system, apparatus and method for controlling an internal pressure of an inflatable pad without additional use of an external bladder or a customized mattress. The user merely needs to connect the control apparatus to the mattress and the appropriate pressure of the mattress may be automatically and accurately determined. Furthermore, it is also easy for installation, user friendly and cost efficient, which may provide a really competitive solution compared to the prior arts.

Detailed descriptions of the preferred embodiments are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

## Claims

1. A pressure controlling system (100), comprising:
- an inflatable pad (200) for supporting a user; and
- a control apparatus (300) comprising:
- a control valve (310) for switching between statuses to selectively perform inflation and deflation of the inflatable pad (200);
- a sensor (325) for measuring the internal pressure of the inflatable pad (200),
- a driving device (330) coupling to the control valve (310) to blow air into the inflatable pad (200); and
- a controller (320) coupling to the control valve (310) for controlling the internal pressure at a predetermined pressure and, responsive to the present of the user, deflating the inflatable pad (200) within a deflation period;
wherein the internal pressure is recorded during the deflation period and a characteristic curve corresponding to the user is obtained representing the variation of the internal pressure, and wherein the controller (320) determines an appropriate pressure based on the characteristic curve.

2. The system according to claim 1, wherein the inflatable pad (200) further comprises a mattress (210) having at least one first cell (211) and at least one second cell (212), and the control valve (310) further comprises at least one first opening (312), at least one second opening (314), at least one first outlet opening (316), at least one second outlet opening (318) and an inlet opening (319), the control apparatus (300) further comprises a hose (335) having a first transport tube (336) connecting the first opening (312) and the first cell (211), and a second transport tube (337) connecting the second opening (314) and the second cell (212), and wherein the inlet opening (319) is coupled to the driving device (330) and the control valve (310) selectively allows the performance of inflation selectively through the first opening (312) and second opening (314) and the performance of deflation selectively through the first outlet opening (316) and the second outlet opening (318).

3. The system according to claim 2, wherein the sensor further comprises at least one sensing unit (322, 324) for respectively measuring an internal pressure of the first cell and an internal pressure of the second cell.

4. The system according to claim 2, wherein at least one of the following is between about 0.1 mm and about 30 mm: (i) an inner diameter of the inlet opening (319); and (ii) an inner diameter of a bottleneck through the air flowing path between the control valve (310) and the inflation pad (200).

5. The system according to claim 1, wherein the deflation period is a predetermined period and the controller further records the internal pressure at the end of the deflation period.

6. The system according to claim 1, wherein the controller further records the duration of the deflation period upon the internal pressure reaching to a target pressure.

7. A pressure controlling apparatus (300) for controlling an internal pressure of an inflatable pad (200), comprising:
- a control valve (310) for switching between statuses to selectively perform inflation and deflation of the inflatable pad (200);
- a sensor (325) for measuring the internal pressure of the inflatable pad (200),
- a driving device (330) coupling to the control valve (310) to blow air into the inflatable pad (200); and
- a controller (320) coupling to the control valve (310) for controlling the internal pressure at a predetermined pressure and, responsive to the present of a user, deflating the inflatable pad (200) within a deflation period;
wherein the internal pressure is recorded during the deflation period and a characteristic curve corresponding to the user is obtained representing the variation of the internal pressure, and wherein the controller (320) determines an appropriate pressure based on the characteristic curve.

8. The apparatus according to claim 7, wherein the control valve (310) further comprises at least one first opening (312), at least one second opening (314), at least one first outlet opening (316), at least one second outlet opening (318) and an inlet opening (319), the control apparatus (300) further comprises a hose (335) having a first transport tube (336) connecting the first opening (312) and a first cell (211) of the inflatable pad (200), and a second transport tube (337) connecting the second opening (314) and a second cell (212) of the inflatable pad (200), and wherein the inlet opening (319) is coupled to the driving device (330) and the control valve (310) selectively allows the performance of inflation selectively through the first opening (312) and second opening (314) and the performance of deflation selectively through the first outlet opening (316) and the second outlet opening (318).

9. The apparatus according to claim 8, wherein the sensor further comprises at least one sensing unit (322, 324) for respectively measuring an internal pressure of the first cell and an internal pressure of the second cell.

10. The apparatus according to claim 7, wherein at least one of the following is between about 0.1 mm and about 30 mm: (i) an inner diameter of the inlet opening (319); and (ii) an inner diameter of a bottleneck through the air flowing path between the control valve (310) and the inflation pad (200).

11. The apparatus according to claim 7, wherein the deflation period is a predetermined period and the controller further records the internal pressure at the end of the deflation period.

12. The apparatus according to claim 7, wherein the controller further records the duration of the deflation period upon the internal pressure reaching to a target pressure.

13. A method for controlling an internal pressure of an inflatable pad (200), comprising the following steps:
- controlling the internal pressure of the inflatable pad (200) to a predetermined pressure;
- upon the present of a user, deflating the inflatable pad (200) within a deflation period;
- recording a variation of the internal pressure during the deflation period;
- obtaining a characteristic curve corresponding to the user;
- comparing the obtained characteristic curve to a database containing a plurality of characteristic curves corresponding to persons with a plurality of mass distributions; and
- determining an appropriate pressure corresponding to the user based on the comparison.

14. The method according to claim 11, wherein the recording step further comprises the step of:
- recording the internal pressure at the end of the deflation period.

15. The method according to claim 11, wherein the recording step further comprises the step of:
- recording the duration of the deflation period for the internal pressure reaching to a target pressure.

16. The method according to claim 11, wherein the controlling step further comprises the steps of:
- controlling a driving device (330) to inflate the inflatable pad (200) through a control valve (310);
- measuring the internal pressure of the inflatable pad (200); and
- determining whether the internal pressure equals to the predetermined pressure.
